# EUROPEAN PATENT SPECIFICATION

(11) **EP 1 674 144 B1**
(45) Date of publication and mention of the grant of the patent: **10.10.2007**
(21) Application number: 04030633.4
(22) Date of filing: 23.12.2004
(51) Int. Cl.: B01D 39/16, B01D 46/12, B01D 46/52

(54) **Turbine air-intake filter**
Luftfilter für Turbineneinlass
Filtre pour système d'aspiration d'air pour turbine

(43) Date of publication of application: 28.06.2006
(73) Proprietor: W.L. Gore & Associates GmbH, 85640 Putzbrunn (DE)
(72) Inventor: Schwarz, Robert, 82194 Gröbenzell (DE)
(74) Representative: Klunker . Schmitt-Nilson . Hirsch

(56) References cited:
- EP-A- 1 236 494
- EP-A- 1 266 681
- US-A- 5 766 288
- US-A- 5 954 962
- US-B1- 6 296 691

## Description

### BACKGROUND

The present invention relates to the use of an air-intake filter for removing particles from a gas stream entering a gas turbine, and to a system comprising said air-intake filter along with a gas turbine.

It is important that highly cleaned air is supplied to the intake of a gas turbine. Small particles in the intake air may deposit on the blades and cause fouling in the compressor section of the turbine. The intake air therefore first passes through a filter system before it enters the turbine. The filter system must work reliably in harsh environments, such as off-shore platforms, and tropical, arctic and desert areas. Some typical applications of highly efficient filter systems are emergency power generators, gas turbines of modern sea vessels, and gas mining operations where gas from salt stocks is unearthed. To prevent early corrosion of the turbine, the filter system should prevent any water and salt particle ingression. For instance, salt particles in the intake air have proven to cause corrosion in the hot channel section of the turbine located behind the combustion chamber.

The filter systems commonly used today are highly complex and of multistage or "cascade" type. A cascade filter system is composed of successive, but independent stages comprising a mechanical splash protection (such as a hood with louvers) and followed by a demister to remove water droplets from fog. Next, a prefilter is optionally provided when the filter system is intended for use in highly polluted areas to prolong the life of the final stage filter. Thereafter, the intake air is passed through a highly efficient depth filter with a particle filtration efficiency of e.g. 85 % for 0.5 µm sized particles at working conditions. Finally, a separate filter for salt removal is installed downstream of the filter system. The prefilter, depth filter and salt filters can be arranged in various designs, like cartridge, panel, minipleat and filter bag. A large number of such cartridges are connected in parallel to provide adequate airflow for the turbine. For instance, a single small gas turbine may require more than 50.000 m³ air per hour. A complete filter system may fill one ore more housings, depending on the amount of intake air needed.

The aforementioned cascade filter systems generally provide very limited protection from dust, salt and water ingression. In addition, they require frequent maintenance of the various filter stages as well as repair due to corrosion caused by salt and water ingressions. In highly polluted environments, it is not uncommon to completely remove the core for overhaul every three to six months.

Therefore, it is desirable to design a lighter and less complex filter system with longer lifetime, less maintenance and improved water and salt removal capabilities. Such system would offer greater protection for gas turbines used in severe environmental conditions.

EP 1 266 681 A2 describes a filter medium for a gas turbine in which contamination of the turbine is less likely to be caused. Such filter medium includes a porous polytetrafluorethylene (ePTFE) membrane and two air permeable supporting layers. At least one of the two supporting layers is disposed on the upstream side of the membrane and functions as a prefilter with respect to atmospheric dust. The other one of the two supporting layers is disposed either on the downstream side of the membrane or between the first supporting layer and the membrane, and functions as a reinforcing member. However, additional supporting layers may be provided and it is even suggested to combine the prefilter function and the reinforcing function within a single supporting layer on the upstream side of the membrane.

The air-permeable supporting member is described as being preferably made from non-woven fabric consisting of polyolefine fibers with an average fiber diameter between 0.2 µm and 15 µm and a fabric weight of 30 g/m² for the prefilter material. The air permeability thereof must be greater than the air permeability of the porous PTFE membrane. The porous PTFE membrane is described as having an average pore diameter of 0.01 µm to 5 µm, specified in the sole example as 1 µm, and an average fiber diameter of 0.2 µm to 1.0 µm, specified in the example as 0.2 µm, while exhibi ting a pressure drop of 50 Pa to 1.000 Pa, specified in the example as 176,5 Pa, when air is passed through the membrane at a velocity of flow of 5.3 cm/s. As a result, the overall thickness of the filter media is 0.15 mm and 0.3 mm.

In their description of the invention, special measures are taken to discharge the filter media, as static charges are described as being undesired. Conclusively, in order to prevent electrostatic charging, the air-permeable supporting members are made of a material resistant to electrostatic charging.

In-field application of the single stage filter media described in EP 1266 681 A2 have not been observed so far. While such filter media suggests a way as to meet the demands set out above, there is a need to further improve such filter media so as to make it suitable for in-field applications in gas turbines.

### SUMMARY OF THE INVENTION

This is achieved according to the invention by a turbine air-intake filter basically similar to the overall structure as suggested in EP 1 266 681 A2, however, with some modifications. Accordingly, the turbine air-intake filter comprises a composite filter media and a frame into which the composite filter media is mounted so as to create an air-tight fit between the filter media and the frame, wherein the filter media comprises a membrane filtration layer having a porous polymeric membrane, and at least one depth filtration media layer comprising fibers and being disposed on an upstream side of the membrane filtration layer relative to a direction of air flow through the filter. According to the invention, the fibers of the depth filtration media layer acting as the prefilter have an electrostatic charge.

While electrically charged filter material may be made by a variety of known techniques, one convenient way of cold charging the fiber web is described in US 5,401,446. The charged fibers enhance filter performance by attracting small particles to the fibers and retaining them. It has been found that the pressure drop in the filter media thereby increases at a slower rate than it does without the electrical charge in the depth filtration media.

The removal of small particles within the depth filtration media (prefilter) prevents early clogging of the membrane filtration layer due to buildup of a filter cake on the membrane surface (which is a "surface" filtration media as compared to the "depth" filtration media). The permeability of the filter cake is therefore maintained over a longer period of time. It is estimated that the filter according to the present invention can be designed for continuous use in highly polluted areas for over and up to two years without the need of filter replacement.

A support layer different from the depth filtration media is preferably provided on the upstream or downstream side of the membrane, to provide the support to withstand the air flow and the resulting pressure drop. It is to be noted, however, that the support layer will substantially affect the overall permeability of the filter media. This is in particular the preferred case where the support layer is laminated to the membrane. Conclusively, the permeability of the filter might be reduced by a factor of 5 due to the lamination with the support layer.

While the depth filtration media layer or layers preferably comprise a non-woven fibrous web, in particular a melt blown web, the membrane filtration layer is preferably made of porous polytetrafluoroethylene (ePTFE). ePTFE is hydrophobic and the fine microporous structure results in a surface that is resistant to water entry and highly efficient in capturing small particles; therefore it also effectively prevents salt particles from passing through. It has been proven particularly advantageous to use ePTFE membranes as described in US 5,814,405. The membranes described therein have high filtration efficiency, air flow and burst strength. Methods of making suitable ePTFE membranes are fully described therein and are incorporated herein by reference. These ePTFE membranes are available from W.L. Gore & Associates, Inc. of Newark, Delaware. However, ePTFE membranes of the same structure manufactured by other means can also be used.

It has been found that this particular kind of ePTFE membrane provides a good trade-off between the relevant factors: air permeability, water and salt retention, particle filtration efficiency and handling. In particular, pin holes which typically occur when the filter media is folded to form a pleated cartridge or panel filter appear to be no longer a problem when such ePTFE membranes are used.

These advantageous properties of the membrane can be attributed to their microstructure. More specifically, the ePTFE membranes described in US 5,814,405 have an internal microstructure consisting essentially of a series of nodes interconnected by fibrils, wherein the nodes are generally arranged in parallel, highly elongated and have an aspect ration of 25:1 or greater, preferably 150:1 or greater. This can be achieved when the ePTFE membranes are formed from a blend of a PTFE homopolymer and a modified PTFE polymer.

While the mean flow pore sizes of the membranes disclosed in US 5,814,405 are in the range below or equal to 1.5 µm, it is preferred for the purposes of the present invention to have a mean flow pore size greater than 1.5 µm, in particular between 1.5 µm and 15 µm, and in a preferred embodiment about 3 µm. This can be easily achieved by further expanding the membrane during its manufacture in the longitudinal and/or transverse direction until the desired porosity is obtained.

It is thus possible to provide a turbine air-intake filter comprising a composite filter media with a pleated laminate comprising an ePTFE membrane and a support layer and at least one electrostatically charged melt blown filter media, the laminate having an air permeability of about 55 m³/m²h (3 Frazier) to about 275 m³/m²h (15 Frazier) and a particle filtration efficiency of at least 90 %, in particular above 95 %, for 0.3 µm sized particle at 10 cm/s, in a particular embodiment 5.3 cm/s, or lower face velocity, whereas the melt blown filter media has an air permeability of about 550 m³/m²h (30 Frazier) to about 2380 m³/m²h (130 Frazier) and a particle filtration efficiency of at least 50 % for 0.3 µm sized particles. Filtration efficiency of 99 % and higher for 0.3 µm particles at 1 cm/s up to 10 cm/s face velocity could be obtained from such composite filter (H12-13), which is highly desirable for gas turbine air-intake applications.

With the present invention, a separate demister is no longer required. Also, the optional prefilter already forms part of the filter media so that the filter media of the present invention can be used in severest environments between -60°C and +70°C. Finally, a separate salt filter is no longer necessary because the membrane media is water resistant (IP X5) and also provides high salt retention. Corrosion of turbine parts is thus effectively prevented. The single stage filter media according to the invention is light-weight, and estimate to have a lifetime of 2 years and longer under severest environmental conditions.

Due to the multilayer structure of the composite filter media, only very small air particles will penetrate the prefilter and will reach the membrane surface with a certain delay. The melt blown prefilter with a filtration efficiency of about 90 %, thus, already filters a major part of the particles. Over the time a filter cake builts up on the upstream side of the prefilter. Such filter cake provides an additional filtering effect. The filter cake's filtering efficiency enhances over the time and constitutes a kind of pre-prefilter. When a filter loaded in the aforementioned manner is exposed to a humid climate with e.g. more than 90 % relative humidity, the filter cake exhibits an important function for the entire filter media. More particularly, if the filter cake was built up directly on the surface of the membrane material, swelling of the filter cake particles in humid climate would result in an increased pressure drop over the filter media. However, such pressure drop increase is less if the filter cake is separated from the membrane surface such as by means of the prefilter.

### BRIEF DESCRIPTION OF THE DRAWINGS

FIG. 1 is a cross sectional view of a composite filter media for the system of the present invention,
FIG. 2 is a cross sectional view of another composite filter media with a separate support layer on the downstream side of the filter media,
FIG. 3 is a cross sectional view of still another filter media with the separate support layer being centrally disposed,
FIG. 4 is a cross sectional view of a further filter media with an additional stabilizing layer on the upstream side of the filter media,
FIG. 5 is a perspective view of a filter for use as a turbine air-intake filter,
FIG. 6 is a perspective view of a cartridge filter for use as a turbine air-intake filter,
FIG. 7 depicts, as an example, an enlarged cross sectional view of the structure of a preferred membrane filtration layer forming part of the composite filter media, and
FIG. 8 is a graph showing the improved performance of the composite filter media over other membrane filters.

### DETAILED DESCRIPTION OF THE DRAWINGS

The composite filter media used in the turbine air-intake filter in the system of the present invention provides at least two filtration layers: a membrane filtration layer and a depth filtration layer. The membrane filtration layer comprises a porous polymeric membrane. Positioned upstream of the membrane filtration layer relative to the direction of air flow is at least one depth filtration media layer. Optionally, the composite filter media may include a support layer. The support layer may be positioned either upstream or downstream of the membrane filtration layer relative to the air flow through the filter. Optionally, the support layer may be laminated to the membrane.

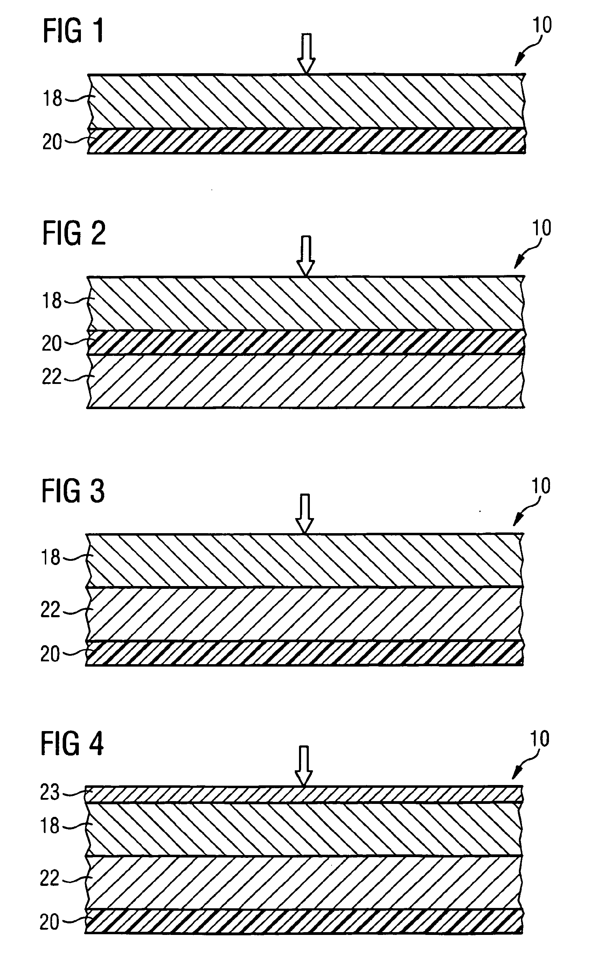

Figures 1 to 3 show cross-sections of several aspects of a composite filter media 10 with an overall thickness of preferably between 0.5 and 1.5 mm. A depth filtration media layer 18 is positioned upstream of a membrane filtration layer 20, the direction of flow being indicated by an arrow (figure 1). Shown in figure 2 is a filtration media 10 comprising a support layer 22 disposed on the downstream side of membrane filtration layer 20. In figure 3 support layer 22 is disposed on the upstream side of membrane filtration layer 20 between depth filtration media layer 18 and membrane filtration layer 20. While support layer 22 is preferably laminated to membrane filtration layer 20 thermally or via an adhesive, the depth filtration media layer 18 may be in loose contact with membrane filtration layer 20 and support layer 22, respectively.

In addition, as shown in Fig. 4, a stabilizing layer 23 in the form of e.g. a fibrous net can be arranged as an uppermost layer on top of depth filtration media layer 18 in order to prevent disarrangement of the fibers in depth filtration media layer 18 during handling and processing of filter media 10. The stabilizing layer 23 is preferably made from a meltblown having an area weight of about 5 to 10 g/m² and can be attached to the depth filtration media layer 18 thermally, mechanically or by means of an adhesive.

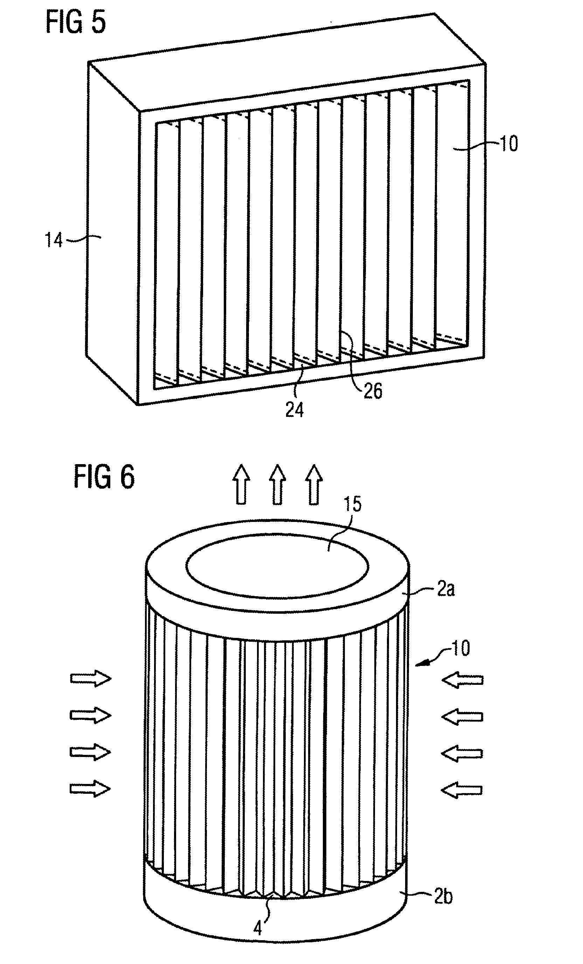

As may be better seen in figure 5, filter media 10 is preferably folded upon itself in a pleated fashion so as to provide better structural integrity and to significantly increase the exposed surface area for filtration. The media is pleated such that apices 26 of membrane filtration layer 20 and depth filtration layer 18 are aligned. The pleats may have a height of preferably not more than 250 mm, most preferably in the range of about 30 to 90 mm. While filter media 10 is shown in figure 5 as being pleated to form a pleated panel, it is often desirable to join the two edges of the panel to form a cylindrical filter media (figure 6). The pleats are preferably stabilized by spacers on the upstream and/or downstream side so as to allow filter operation at high face velocities of up to and over 5 cm/s. Also, cleaning the filter media by subjecting it to one or more reverse flow pulses of high pressure ("back pulse method") requires strong pleat formation.

Figure 5 illustrates the filter with composite filter media 10 mounted within a frame 14. The dimensions of frame 14 are application specific and should be designed to provide a tight fit within a conduit carrying the gas/air to be filtered. The frame can be of any material, such as metals, including aluminium or galvanized steel or a structural polymer. Preferably, the frame is constructed of anodized aluminium. Filter media 10 should be mounted into frame 14 so as to create an air-tight fit between filter media 10 and frame 14 and avoid the seepage of unfiltered air around filter media 10. Ideally, filter media 10 is mounted to frame 14 using a potting material 24, such as polyurethane, epoxy, silicone, hot-melt adhesive, or plastisol. In order to establish a tight seal, potting material 24 should be chosen or treated to wet-out into filter media 10 so as to assure a continuous seal. In one cartridge example, the media 10 can be designed for an air flow capacity of 500 to 1500 m³/h, preferably about 1000 m³/h.

Optionally, a hood with louvers can be arranged as a mechanical splash protection in front of the filter.

Depth filtration media layer 18 of the composite filter media 10 is preferably a non-woven fibrous polymeric web, such as a spun bond or preferably a melt blown web, consisting of polypropylene or polyethylene, non-woven polyester fabric, fiberglass, microfiberglass, cellulose and polytetrafluoroethylene.

Melt blown webs are produced by entraining melt spun fibers with convergent streams of heated air to produce extremely fine filaments. Melt blown processing forms continuous sub-denier fibers, with relatively small diameter fibers that are typically less than 10 microns.

The melt blown polymer fiber web layer(s) can be made from a variety of polymeric materials, including polypropylene, polyester, polyamide, polyvinylchloride, polymethylmethacrylate, and polyethylene. Polypropylene is among the more preferred polymeric materials. Typically, the polymer fibers that form the web have a diameter in the range of about 0.5 µm to about 10 µm. Preferably, the fiber diameter is about 1 µm to about 5 µm.

The thickness of the depth filtration layers is not critical. If the depth filtration media is a melt blown web, for example, the thickness may be from about 0.25 mm to about 3 mm. Greater thickness results in higher dust capacity. However, excessively thick depth filtration media layers may limit the total number of layers that can be used in the composite filter media.

The selection of the basis weight of the depth filtration media is also within the capability of those of skill in the art. The weight of a melt blown polymer fiber web may, for example, be in the range of about 1 g/m² to about 100 g/m², preferably the basis weight of the melt blown fiber web is about 10 g/m² to about 50 g/m².
At least one depth filtration media is formed as an electret filter media comprising a highly efficient layer having an electrostatic charge. Electric charge is imparted to melt blown fibrous webs to improve their filtration performance using a variety of known techniques.

For example, a suitable web is conveniently cold charged by sequentially subjecting the web to a series of electric fields, such that adjacent electric fields have substantially opposite polarities with respect to each other, in the manner taught in US-Patent No. 5,401,446, to Tsai et al. As described therein, one side of the web is initially subjected to a positive charge while the other side of the web is initially subjected to a negative charge. Then the first side of the web is subjected to a negative charge and the other side of the web is subjected to a positive charge. However, electret filter materials may also be made by a variety of other known techniques.

The depth filtration media may also contain additives to enhance filtration performance and may also have low levels of extractable hydrocarbons to improve performance. The fibers may contain certain melt processable fluorocarbons, for example, fluorochemical oxazolidinones and piperazines and compounds of oligomers that contain perfluorinated moieties. The use of such additives can be particularly beneficial to the performance of an electrically charged web filter.

Downstream of depth filtration layer 18 is disposed microporous polymeric membrane filtration layer 20. Microporous polymeric membrane 20 is intended to capture particles that pass through the depth filtration layers. Microporous polymeric membranes have demonstrated dependability and reliability in removing particles and organisms from fluid streams. Membranes are usually characterized by their polymeric composition, air permeability, water intrusion pressure and filtration efficiencies.

A variety of microporous polymeric membranes can be used as the membrane filtration layer, depending on the requirements of the application. The membrane filtration layer may be constructed from the following exemplary materials: nitrocellulose, triacetyl cellulose, polymide, polycarbonate, polyethylene, polypropylene, polytetrafluorethylene, polysulfone, polyvinylchloride, polyvinylidene fluorid, acrylate copolymer.

The membrane filtration layer is preferably constructed from a hydrophobic material that is capable of preventing the passage of liquids. The membrane filtration layer must be able to withstand the applied differential pressure across the filter media without any liquid passing through it. The preferred membrane has a water intrusion pressure of 0.01 bar to 0.25 bar and an average air permeability of about 128 m³/m²h (7 Frazier) to about 1830 m³/m²h (100 Frazier), and more preferably, an average air permeability of at least about 550 m³/m²h (30 Frazier), most preferably of at least about 1100 m³/m²h (60 Frazier).

Preferably, the membrane filtration layer is a microporous fluoropolymer, such as ePTFE, fluorinated ethylenepropylene (FEP), perfluoroalkoxy polymer (PFA), polypropylene (PU), polyethylene (PE) or ultra high molecular weight polyethylene (uhmwPE).

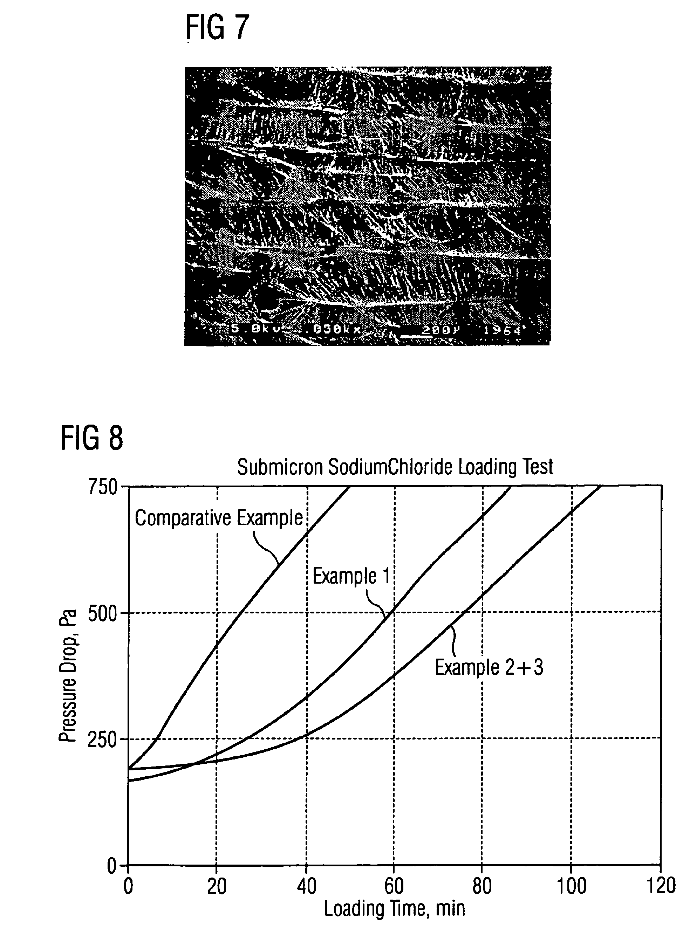

Most preferably, the membrane filtration layer comprises ePTFE. Suitable ePTFE membranes are described in US 5,814,405. The membranes described therein have good filtration efficiency, high air flow and burst strength. Figure 7 depicts an SEM image taken from the aforementioned US patent and is introduced in this application to give an example of the microstructure of the ePTFE membranes described therein. As can be seen, the microstructure of the membrane consists of a series of nodes interconnected by fibrils, wherein the nodes are generally arranged in parallel, highly elongated and have an aspect ratio of 25:1 or greater. It is believed that the long nodes of the microstructure help prevent any splitting of the membrane during the filter pleating process, thereby avoiding the danger of pin hole formation.

Membrane filtration layer 20 may optionally contain a filler material to improve certain properties of the filter. Suitable fillers, such as carbon black, or other conductive filler, catalytic particulate, fumed silica, colloidal silica or adsorbent materials, such as activated carbon, or ceramic fillers, such as activated alumina and TiO₂, and methods preparing filled membranes useful in the present invention are fully described in US 5,814,405.

Support layer 22 is provided to stabilize filtration layer 20. Preferred supporting material must therefore be rigid enough to support the membrane and depth filtration layers, but soft and supple enough to avoid damaging the membrane. The support layer 22 may comprise non-woven or woven fabrics. Other examples of suitable support layer materials may include, but are not limited to, woven and non-woven polyester, polypropylene, polyethylene, fibreglass, microfiberglass, and polytetrafluorethylene. In a pleated orientation, the material should provide airflow channels in the pleats while holding the pleats apart (i.e., preventing the pleats from collapsing). Materials such as spunbonded non-wovens are particularly suitable for use in this application.

Support layer 22 may be positioned upstream or downstream of the membrane filter layer 20. Support material 22 may be laminated to the membrane filtration layer to form a base layer. In this aspect, the base layer advantageously provides both support to the overlaying melt blown media layer and acts as the final filtration surface.

### TEST METHODS

### Permeability

Air permeability can be determined according to a Frazier number test method. In this method, air permeability is measured by clamping a test sample in a gasketed-flanged fixture, which provides a circular section of approximately 2.75 inches in diameter and 6 square inches in area for air flow measurement. The upstream side of the sample fixture is connected to a flow meter in line with a source of dry compressed air. The downstream side of the sample fixture is open to the atmosphere. Testing is accomplished by applying an air pressure of 0.5 inches of water to the upstream side of the sample and recording the flow rate of the air passing through the in-line flowmeter (a ball-float rotameter). The sample is conditioned at 21°C and 65 % relative humidity for at least 4 hours prior to testing. Results are reported in terms of Frazier Number which has units of m³/m²h of sample at 12,7 mm (0.5 inches) of water pressure. 1 Frazier equals 18.3 m³/m² h.

### Dust Capacity:

Dust capacity may be determined according to the following method. A 3 % aqueous sodium chloride solution is atomized using a constant output atomizer (TSI Model 3096; Shoreview, MN). The particles are dried by heating at 80°C and then diluted with clean dry air. The particle size distribution is measured by an aerodynamic particle sizer (e.g., TSI Model 3320; Shoreview, MN). The geometric mean particle diameter and standard deviation are determined.

The filter test sample, 44.4 mm in diameter, is weighed prior to testing and is placed inside a filter holder. The face velocity is set to 53 mm/s. The pressure drop across the filter is monitored continuously by a pressure transducer (e.g., Heise Model PM10; Stratford, CT). The filter is loaded with the sodium chloride aerosol until the final pressure drop across the filter media reaches 750 Pa. The test sample is weighed again after the test to determine the mass loading. The dust loading capacity is the difference between the final and initial mass of the test sample.

### Filtration Efficiency:

The particle collection efficiency is measured by an automated efficiency tester (e.g., Model 8160, available from TSI, Inc., St. Paul, Minnesota). The test is performed at ambient room temperature (70°F) and relative humidity conditions (40 %). A dioctyl-phthalate (DOP) solution is atomized to generate an aerosol containing particles from 0.03 to 0.5 microns in diameter. The filter sample is challenged with the aerosol at air flow velocity of 5.3 cm/s. Two condensation nucleus particle counters measure the particle concentrations upstream and downstream of the test sample simultaneously. The particle condition efficiency is reported as the percentage of upstream challenge particles collected by the filter.

### COMPARISON OF CHARGED AND DISCHARGED MELT BLOWNS

The different efficiency of charged and discharged melt blowns (MB) is shown in table 1 below in respect of three examples A, B and C.

**Table 1**

| **Filter** | **Permeability, frazier** | **Loading Capacity, mg** | **Dust Capacity, g/m²** | **Improvement** |
|---|---|---|---|---|
| Example A ePTFE | 7.6 | 8.8 | 6.4 | - |
| Example B ePTFE+MB charged | 4.9 | 12.6 | 9.1 | 43% |
| Example C ePTFE+MB neutral | 5.1 | 4.4 | 3.2 | -50% |

Example A relates to an ePTFE membrane laminate comprising an ePTFE membrane with a 203 g/m³ polyester spunbond backer as a support layer.
The membrane has a permeability of about 7.6 Frazier and exhibits a dust capacity of 6.4 g/m³ under certain test conditions.

Example B relates to an inventive composite filter media with a 30 g/m² polypropylene melt blown being ultrasonically bonded to the ePTFE membrane laminate of example A. The melt blown used in this example is available from Hollingsworth and Vose Company, based in East Walpole, MA. as part number TR1462A. Ultrasonic bonding is made over the whole surface of the filter with small weld points of about 0.8 mm in size, there being approximately 55500 points/m². The permeability of the composite filter media is about 4.9 Frazier and the filter media exhibits a dust capacity of 9.1 g/m³ under the same test conditions, this being an improvement of 43 %.

While the composite filter media in example B is electrostatically charged according to the present invention, example C relates to the same composite filter media, however, discharged by dipping it in isopropyl-alcohol or isopropanol to neutralize the electrostatic charge, and subsequent drying. While the permeability does not change much, as could be expected, example C exhibits a lower dust capacity than example B, i.e. a dust capacity of 3.2 g/m² only. Surprisingly, the uncharged composite filter media results in a dust capacity that is even lower than that of the ePTFE laminate alone.

### COMPARATIVE EXAMPLE

A microporous ePTFE membrane laminate, available from W.L. Gore & Associates, Inc. (Newark, DE), illustrates the loading capacity of membrane filter. The ePTFE membrane has air permeability in the range of 18 to 29 Frazier, in average about 25 Frazier, ball burst strength greater than 0.2 bar, weight about 5 g/m², and a filtration efficiency of about 95% or over at a face velocity of 5.3 cm/s. The water ingression pressure of the membrane is about 100 mbar. The ePTFE membrane is bonded to a polyester spunbond support material (available from Toray, Japan) with basis weight of 270 g/m², air permeability between 28 to 32 Frazier, and mullen burst greater than 14 bar. The membrane is bonded to the support material at temperature between 180°C and 350°C, and pressure between 0.1 to 7 bar. The resulting ePTFE laminate has air permeability between 5 to 8 Frazier. The filter is loaded with sodium chloride aerosol in accordance with the test procedure described previously until pressure drop reaches 750 Pa. The dust loading curve for the laminate is shown in figure 8. The total dust loading capacity is 14 mg.

### EXAMPLE 1

A layer of 10 g/m² melt blown media (DelPore 6001-10P, available from DelStar, Inc.; Middletown, DE) are placed upstream of the ePTFE membrane laminate of the comparative Example to form a composite media. The melt blown media is made of 10 g/m² polypropylene meltblown layer and 10 g/m² polyester spun bond scrim. The polypropylene fibers have diameters of from 1 to 5 µm. The mean pore size is about 15 µm and the media thickness is about 0.2 mm. The air permeability of the depth filtration layer is about 130 Frazier. The media is electrically charged to enhance particle collection efficiency. The filter is loaded with sodium chloride aerosol in accordance with the test procedure described previously until pressure drop reaches 750 Pa. The loading curve is depicted in figure 8.

### EXAMPLE 2

A depth filtration media layer of 30 g/m² melt blown media (DelPore 6001-30P, available from DelStar, Inc.; Middletown, DE) is positioned upstream of the microporous ePTFE laminate of the Comparative Example to form a composite media. The melt blown media is made of 30 g/m² polypropylene fibers layer and 10 g/m² polyester spun bond scrim. The polypropylene fibers have diameters from 1 to 5 µm. The mean pore size is about 15 µm and the media thickness is about 0.56 mm. The air permeability of the meltblown is about 37 Frazier. The media is electrically charged to enhance particle collection efficiency. Two layers of this meltblown media are placed upstream of the microporous ePTFE laminate. The filter is loaded with sodium chloride aerosol as described previously until pressure drop reaches 750 Pa. The results are depicted in figure 8.

### EXAMPLE 3

A depth filtration media layer of 30 g/m² melt blown polypropylene (DelPore 6001-30P, available from DelStar, Inc.; Middletown, DE, USA) is positioned upstream of the microporous ePTFE laminate of the Comparative Example to form a composite media. The melt blown media is made of 30 g/m² polypropylene fibers layer and 10 g/m² polyester spun bond scrim. The scrim supports the soft melt blown media. The polypropylene fibers have diameters from 1 to 5 µm. The mean pore size is about 15 µm and the media thickness is about 0.56 mm. The air permeability of the melt blown is about 37 Frazier. The media is electrically charged to enhance particle collection efficiency. One layer of this melt blown media is placed upstream of and connected to the microporous ePTFE laminate to form a composite filter media wherein the scrim forms the outer upstream side. The filter is loaded with sodium chloride aerosol as described previously until pressure drop reaches 750 Pa. The loading curve is depicted in figure 8. It is substantially indentical with the loading curve of Example 2.

The composite media is used to form a cartridge filter as shown in figure 5. The cartridge filter comprises the pleated composite media material 10, which is arranged in a circle, so that at least one of the side edges 4 is sealed by corresponding closure caps 2a, 2b. The cartridge filter comprises a high of 70 cm and a diameter of 35 cm. The pleated composite media material of one filter has a filtration area of 12.6 m². The air flow rate of 1000 m³/h is reached at a pressure drop of approximately 180 Pa if the filter is new. The inside 15 of the media material circle has a metal grid. For full supply of a gas turbine of 5 MW with air for example 64 cartridge filters may be arranged in one filter house.

The filtration efficiency of the filter is shown in table 2 below. Table 2 shows the efficiency between a ePTFE membrane (as described in Example 1), a layer of 30 g/m² melt blown and a filter composite according to Example 3. All three samples were tested with an approach velocity of 1 cm/s and 5.3 cm/s. The composite according Example 3 has the highest filtration efficiency.

**Table 2**

| **Efficiency** ^{@} **1 cm/s** | | | | **Efficiency** ^{@} **5.3 cm/s** | | |
|---|---|---|---|---|---|---|
| **Particle Size, µm** | **ePTFE** | **30 g/m² melt blown** | **Composite** | **ePTFE** | **30 g/m² melt blown** | **Composite** |
| 0.03 | 99.786 | 99.218 | **99.977** | 97.141 | 83.185 | **99.226** |
| 0.05 | 99.652 | 95.120 | **99.961** | 95.997 | 81.523 | **98.898** |
| 0.07 | 99.490 | 94.809 | **99.946** | 95.082 | 80.417 | **98.703** |
| 0.1 | 99.274 | 95.721 | **99.939** | 94.868 | 81.093 | **98.867** |
| 0.15 | 99.189 | 96.847 | **99.954** | 95.551 | 81.643 | **99.145** |
| 0.2 | 99.265 | 97.655 | **99.974** | 96.659 | 82.349 | **99.440** |
| 0.3 | 99.570 | 98.587 | **99.993** | 98.360 | 85.424 | **99.779** |

## Claims

1. A system comprising a gas turbine and an air-intake filter for removing particles from a gas stream entering the turbine, said filter comprising a composite filter media (10) and a frame (14) into which the composite filter media (10) is mounted so as to create an air-tight fit between the filter media (10) and the frame (14), wherein the filter media (10) comprises
- a membrane filtration layer (20) comprising a porous polymeric membrane,and
- at least one depth filtration media layer (18) comprising fibers and disposed on an upstream side of the membrane filtration layer (20) relative to a direction of gas flow through the filter,
**characterized in that** the fibers of the depth filtration media layer (18) have an electrostatic charge.

2. A system according to claim 1, wherein the membrane filtration layer (20) comprises porous polytetrafluoroethylene (ePTFE).

3. A system according to any of claims 1 or 2, wherein a support layer (22) is disposed on the upstream or downstream side of and adjacent to the membrane filtration layer (20).

4. A system according to claim 3, wherein the support layer (22) is laminated to the membrane filtration layer (20).

5. A system according to any of claims 1 to 4, wherein the at least one depth filtration media layer (18) comprises a non-woven fibrous polymeric web.

6. A system according to claim 5, wherein the non-woven fibrous polymeric web is a melt blown web.

7. A system according to any of claims 1 to 6, wherein the membrane filtration layer has a permeability of at least 128 m³/m²h (7 Frazier), more preferably of at least about 550 m³/m²h (30 Frazier), most preferably of 1100 m³/m²h of (60 Frazier) or greater.

8. A system according to any of claims 1 to 7, wherein each of the at least one depth filtration media layer 18 has a permeability of at least about 550 m³/m²h (30 Frazier), more preferably of at least about 1830 m³/m²h (100 Frazier).

9. A system according to any of claims 1 to 8, wherein the composite filter media (10) has a particle filtration efficiency of at least 90% for 0.3 micron sized particles at a face velocity of 10 cm/s or below.

10. A system according to any of claims 1 to 9, wherein the membrane filtration layer (20) and the at least one depth filtration media layer (18) are pleated such that apices (26) of the membrane filtration layer (20) and the at least one depth filtration layer (18) are aligned.

11. A system according to claim 10, wherein the filter media (10) is shaped as a pleated panel.

12. A system according to claim 11, wherein two edges of the panel are joined to form a cylindrical filter media.

13. A system according to any of claims 1 to 12, wherein the membrane filtration layer (20) is a microporous polytetrafluoroethylene (ePTFE) membrane having an internal microstructure consisting essentially of a series of nodes interconnected by fibrils, wherein the nodes are generally arranged in parallel, highly elongated and have an aspect ratio of 25:1 or greater.

14. A system according to claim 13, wherein the nodes have an aspect ratio of 150:1 or greater.

15. A system according to any of claims 13 or 14, wherein the polytetrafluoroethylene (PTFE) is a blend of a PTFE-homopolymer and a modified PTFE-polymer.

16. A system according to any of claims 13 to 15, wherein the membrane filtration layer has a mean flow pore size greater than 1.5 µm.

17. A system according to claim 16, wherein the mean flow pore size is about 3 µm.

18. A system wherein the gas turbine has according to any of claims 1 to 17 an airflow capacity of more than 50.000 m³ per hour.

19. Use of an air-intake filter for removing particles from a gas stream entering a gas turbine, comprising a composite filter media (10) and a frame (14) into which the composite filter media (10) is mounted so as to create an air-tight fit between the filter media (10) and the frame (14), wherein the filter media (10) comprises
- a membrane filtration layer (20) comprising a porous polymeric membrane, and
- at least one depth filtration media layer (18) comprising fibers and disposed on an upstream side of the membrane filtration layer (20) relative to a direction of gas flow through the filter,
**characterized in that** the fibers of the depth filtration media layer (18) have an electrostatic charge.

20. Use of the air-intake filter according to claim 19, wherein the membrane filtration layer (20) comprises porous polytetrafluoroethylene (ePTFE).

21. Use of the air-intake filter according to any of claims 19 or 20, wherein a support layer (22) is disposed on the upstream or downstream side of and adjacent to the membrane filtration layer (20).

22. Use of the air-intake filter according to claim 21, wherein the support layer (22) is laminated to the membrane filtration layer (20).

23. Use of the air-intake filter according to any of claims 19 to 22, wherein the at least one depth filtration media layer (18) comprises a non-woven fibrous polymeric web.

24. Use of the air-intake filter according to claim 23, wherein the non-woven fibrous polymeric web is a melt blown web.

25. Use of the air-intake filter according to any of claims 19 to 24, wherein the membrane filtration layer has a permeability of at least 128 m³/m²h (7 Frazier), more preferably of at least about 550 m³/m²h (30 Frazier), most preferably of 1100 m³/m²h of (60 Frazier) or greater.

26. Use of the air-intake filter according to any of claims 19 to 25, wherein each of the at least one depth filtration media layer 18 has a permeability of at least about 550 m³/m²h (30 Frazier), more preferably of at least about 1830 m³/m²h (100 Frazier).

27. Use of the air-intake filter according to any of claims 19 to 26, wherein the composite filter media (10) has a particle filtration efficiency of at least 90% for 0.3 micron sized particles at a face velocity of 10 cm/s or below.

28. Use of the air-intake filter according to any of claims 19 to 27, wherein the membrane filtration layer (20) and the at least one depth filtration media layer (18) are pleated such that apices (26) of the membrane filtration layer (20) and the at least one depth filtration layer (18) are aligned.

29. Use of the air-intake filter according to claim 28, wherein the filter media (10) is shaped as a pleated panel.

30. Use of the air-intake filter according to claim 29, wherein two edges of the panel are joined to form a cylindrical filter media.

31. Use of the air-intake filter according to any of claims 19 to 30, wherein the membrane filtration layer (20) is a microporous polytetrafluoroethylene (ePTFE) membrane having an internal microstructure consisting essentially of a series of nodes interconnected by fibrils, wherein the nodes are generally arranged in parallel, highly elongated and have an aspect ratio of 25:1 or greater.

32. Use of the air-intake filter according to claim 31, wherein the nodes have an aspect ratio of 150:1 or greater.

33. Use of the air-intake filter according to any of claims 31 or 32, wherein the polytetrafluoroethylene (PTFE) is a blend of a PTFE-homopolymer and a modified PTFE-polymer.

34. Use of the air-intake filter according to any of claims 31 to 33, wherein the membrane filtration layer has a mean flow pore size greater than 1.5 µm.

35. Use of the air-intake filter according to claim 34, wherein the mean flow pore size is about 3 µm.

36. Use of the air-intake filter according to any of claims 19 to 35 in an air-intake of a gas turbine having an airflow of more than 50.000 m³ per hour.

## Patentansprüche

1. System mit einer Gasturbine und einem Luftansaugfilter zum Entfernen von Teilchen aus einem Gasstrom, der in die Turbine eintritt, wobei der Filter zusammengesetzte Filtermedien (10) und einen Rahmen (14) umfasst, in dem die zusammengesetzten Filtermedien (10) montiert sind, um einen luftdichten Sitz zwischen den Filtermedien (10) und dem Rahmen (14) zu erzeugen, wobei die Filtermedien (10) umfassen
- eine Membranfiltrationsschicht (20) mit einer porösen Polymermembran, und
- mindestens eine Tiefenfiltrationsmedienschicht (18) mit Fasern, die auf einer Stromaufwärtsseite der Membranfiltrationsschicht (20) relativ zu einer Richtung einer Gasströmung durch den Filter angeordnet ist,
**dadurch gekennzeichnet, dass** die Fasern der Tiefenfiltrationsmedienschicht (18) eine elektrostatische Ladung aufweisen.

2. System nach Anspruch 1, wobei die Membranfiltrationsschicht (20) poröses Polytetrafluorethylen (ePTFE) umfasst.

3. System nach einem der Ansprüche 1 oder 2, wobei eine Trägerschicht (22) auf der Stromaufwärts- oder Stromabwärtsseite der und benachbart zur Membranfiltrationsschicht (20) angeordnet ist.

4. System nach Anspruch 3, wobei die Trägerschicht (22) an die Membranfiltrationsschicht (20) laminiert ist.

5. System nach einem der Ansprüche 1 bis 4, wobei die mindestens eine Tiefenfiltrationsmedienschicht (18) ein faserförmiges Polymervliesgewebe umfasst.

6. System nach Anspruch 5, wobei das faserförmige Polymervliesgewebe ein schmelzgeblasenes Gewebe ist.

7. System nach einem der Ansprüche 1 bis 6, wobei die Membranfiltrationsschicht eine Permeabilität von mindestens 128 m³/m²h (7 Frazier), bevorzugter von mindestens etwa 550 m³/m²h (30 Frazier), am meisten bevorzugt von 1100 m³/m²h (60 Frazier) oder größer aufweist.

8. System nach einem der Ansprüche 1 bis 7, wobei jede der mindestens einen Tiefenfiltrationsmedienschicht 18 eine Permeabilität von mindestens etwa 550 m³/m²h (30 Frazier), bevorzugter von mindestens etwa 1830 m³/m²h (100 Frazier) aufweist.

9. System nach einem der Ansprüche 1 bis 8, wobei die zusammengesetzten Filtermedien (10) einen Teilchenfiltrationswirkungsgrad von mindestens 90 % für Teilchen mit einer Größe von 0,3 Mikrometer bei einer Flächengeschwindigkeit von 10 cm/s oder darunter aufweisen.

10. System nach einem der Ansprüche 1 bis 9, wobei die Membranfiltrationsschicht (20) und die mindestens eine Tiefenfiltrationsmedienschicht (18) derart gefaltet sind, dass die Scheitel (26) der Membranfiltrationsschicht (20) und der mindestens einen Tiefenfiltrationsschicht (18) ausgerichtet sind.

11. System nach Anspruch 10, wobei die Filtermedien (10) als gefaltete Platte geformt sind.

12. System nach Anspruch 11, wobei zwei Kanten der Platte verbunden sind, um zylindrische Filtermedien zu bilden.

13. System nach einem der Ansprüche 1 bis 12, wobei die Membranfiltrationsschicht (20) eine mikroporöse Polytetrafluorethylen- (ePTFE) Membran mit einer internen Mikrostruktur, die im Wesentlichen aus einer Reihe von durch Fibrillen miteinander verbundenen Knoten besteht, ist, wobei die Knoten im Allgemeinen parallel angeordnet sind, sehr lang gestreckt sind und ein Seitenverhältnis von 25:1 oder größer aufweisen.

14. System nach Anspruch 13, wobei die Knoten ein Seitenverhältnis von 150:1 oder größer aufweisen.

15. System nach einem der Ansprüche 13 oder 14, wobei das Polytetrafluorethylen (PTFE) ein Gemisch eines PTFE-Homopolymers und eines modifizierten PTFE-Polymers ist.

16. System nach einem der Ansprüche 13 bis 15, wobei die Membranfiltrationsschicht eine mittlere Durchflussporengröße von mehr als 1,5 µm aufweist.

17. System nach Anspruch 16, wobei die mittlere Durchflussporengröße etwa 3 µm ist.

18. System nach einem der Ansprüche 1 bis 17, wobei die Gasturbine eine Luftdurchflusskapazität von mehr als 50000 m³ pro Stunde aufweist.

19. Verwendung eines Luftansaugfilters zum Entfernen von Teilchen aus einem Gasstrom, der in eine Gasturbine eintritt, mit zusammengesetzten Filtermedien (10) und einem Rahmen (14), in dem die zusammengesetzten Filtermedien (10) montiert sind, um einen luftdichten Sitz zwischen den Filtermedien (10) und dem Rahmen (14) zu erzeugen, wobei die Filtermedien (10) umfassen
- eine Membranfiltrationsschicht (20) mit einer porösen Polymermembran, und
- mindestens eine Tiefenfiltrationsmedienschicht (18) mit Fasern, die auf einer Stromaufwärtsseite der Membranfiltrationsschicht (20) relativ zu einer Richtung einer Gasströmung durch den Filter angeordnet ist,
**dadurch gekennzeichnet, dass** die Fasern der Tiefenfiltrationsmedienschicht (18) eine elektrostatische Ladung aufweisen.

20. Verwendung des Luftansaugfilters nach Anspruch 19, wobei die Membranfiltrationsschicht (20) poröses Polytetrafluorethylen (ePTFE) umfasst.

21. Verwendung des Luftansaugfilters nach einem der Ansprüche 19 oder 20, wobei eine Trägerschicht (22) auf der Stromaufwärts- oder Stromabwärtsseite der und benachbart zur Membranfiltrationsschicht (20) angeordnet ist.

22. Verwendung des Luftansaugfilters nach Anspruch 21, wobei die Trägerschicht (22) an die Membranfiltrationsschicht (20) laminiert ist.

23. Verwendung des Luftansaugfilters nach einem der Ansprüche 19 bis 22, wobei die mindestens eine Tiefenfiltrationsmedienschicht (18) ein faserförmiges Polymervliesgewebe umfasst.

24. Verwendung des Luftansaugfilters nach Anspruch 23, wobei das faserförmige Polymervliesgewebe ein schmelzgeblasenes Gewebe ist.

25. Verwendung des Luftansaugfilters nach einem der Ansprüche 19 bis 24, wobei die Membranfiltrationsschicht eine Permeabilität von mindestens 128 m³/m²h (7 Frazier), bevorzugter von mindestens etwa 550 m³/m²h (30 Frazier), am meisten bevorzugt von 1100 m³/m²h (60 Frazier) oder größer aufweist.

26. Verwendung des Luftansaugfilters nach einem der Ansprüche 19 bis 25, wobei jede der mindestens einen Tiefenfiltrationsmedienschicht 18 eine Permeabilität von mindestens etwa 550 m³/m²h (30 Frazier), bevorzugter von mindestens etwa 1830 m³/m²h (100 Frazier) aufweist.

27. Verwendung des Luftansaugfilters nach einem der Ansprüche 19 bis 26, wobei die zusammengesetzten Filtermedien (10) einen Teilchenfiltrationswirkungsgrad von mindestens 90 % für Teilchen mit einer Größe von 0,3 Mikrometer bei einer Flächengeschwindigkeit von 10 cm/s oder darunter aufweisen.

28. Verwendung des Luftansaugfilters nach einem der Ansprüche 19 bis 27, wobei die Membranfiltrationsschicht (20) und die mindestens eine Tiefenfiltrationsmedienschicht (18) derart gefaltet sind, dass die Scheitel (26) der Membranfiltrationsschicht (20) und der mindestens einen Tiefenfiltrationsschicht (18) ausgerichtet sind.

29. Verwendung des Luftansaugfilters nach Anspruch 28, wobei die Filtermedien (10) als gefaltete Platte geformt sind.

30. Verwendung des Luftansaugfilters nach Anspruch 29, wobei zwei Kanten der Platte verbunden sind, um zylindrische Filtermedien zu bilden.

31. Verwendung des Luftansaugfilters nach einem der Ansprüche 19 bis 30, wobei die Membranfiltrationsschicht (20) eine mikroporöse Polytetrafluorethylen- (ePTFE) Membran mit einer internen Mikrostruktur, die im Wesentlichen aus einer Reihe von durch Fibrillen miteinander verbundenen Knoten besteht, ist, wobei die Knoten im Allgemeinen parallel angeordnet sind, sehr lang gestreckt sind und ein Seitenverhältnis von 25:1 oder größer aufweisen.

32. Verwendung des Luftansaugfilters nach Anspruch 31, wobei die Knoten ein Seitenverhältnis von 150:1 oder größer aufweisen.

33. Verwendung des Luftansaugfilters nach einem der Ansprüche 31 oder 32, wobei das Polytetrafluorethylen (PTFE) ein Gemisch eines PTFE-Homopolymers und eines modifizierten PTFE-Polymers ist.

34. Verwendung des Luftansaugfilters nach einem der Ansprüche 31 bis 33, wobei die Membranfiltrationsschicht eine mittlere Durchflussporengröße von mehr als 1,5 µm aufweist.

35. Verwendung des Luftansaugfilters nach Anspruch 34, wobei die mittlere Durchflussporengröße etwa 3 µm ist.

36. Verwendung des Luftansaugfilters nach einem der Ansprüche 19 bis 35 in einem Lufteinlass einer Gasturbine mit einem Luftdurchfluss von mehr als 50000 m³ pro Stunde.

## Revendications

1. Système comprenant une turbine à gaz et un filtre d'admission d'air pour éliminer les particules d'un flux de gaz entrant dans la turbine, ledit filtre comprenant un milieu de filtration composite (10) et un cadre (14) dans lequel le milieu de filtration composite (10) est monté de manière à créer un ajustement étanche à l'air entre le milieu de filtration (10) et le cadre (14), dans lequel le milieu de filtration (10) comprend
- une couche de filtration sur membrane (20) comprenant une membrane polymère poreuse, et
- au moins une couche de milieu de filtration en profondeur (18) comprenant des fibres et disposée sur un côté amont de la couche de filtration sur membrane (20) par rapport à la direction d'écoulement de gaz à travers le filtre,
**caractérisé en ce que** les fibres de la couche de milieu de filtration en profondeur (18) ont une charge électrostatique.

2. Système selon la revendication 1, dans lequel la couche de filtration sur membrane (20) comprend du polytétrafluoroéthylène poreux (ePTFE).

3. Système selon l'une quelconque des revendications 1 ou 2, dans lequel une couche de support (22) est disposée sur le côté amont ou aval de et adjacente à la couche de filtration sur membrane (20).

4. Système selon la revendication 3, dans lequel la couche de support (22) est laminée sur la couche de filtration sur membrane (20).

5. Système selon l'une quelconque des revendications 1 à 4, dans lequel la au moins une couche de milieu de filtration en profondeur (18) comprend une bande polymère fibreuse non-tissée.

6. Système selon la revendication 5, dans lequel la bande polymère fibreuse non-tissée est une bande formée par fusion-soufflage.

7. Système selon l'une quelconque des revendications 1 à 6, dans lequel la couche de filtration sur membrane a une perméabilité d'au moins 128 m³/m²h (7 Frazier), plus préférablement d'au moins environ 550 m³/m²h (30 Frazier), de manière préférée entre toutes de 1100 m³/m²h (60 Frazier) ou plus.

8. Système selon l'une quelconque des revendications 1 à 7, dans lequel chacune de la au moins une couche de milieu de filtration en profondeur 18 a une perméabilité d'au moins environ 550 m³/m²h (30 Frazier), plus préférablement d'au moins environ 1830 m³/m²h (100 Frazier).

9. Système selon l'une quelconque des revendications 1 à 8, dans lequel le milieu de filtration composite (10) a une efficacité de filtration de particule d'au moins 90 % pour des particules d'une taille de 0,3 micron à une vitesse frontale de 10 cm/s ou moins.

10. Système selon l'une quelconque des revendications 1 à 9, dans lequel la couche de filtration sur membrane (20) et la au moins une couche de milieu de filtration en profondeur (18) sont plissées de sorte que les sommets (26) de la couche de filtration sur membrane (20) et de la au moins une couche de milieu de filtration en profondeur (18) soient alignés.

11. Système selon la revendication 10, dans lequel le milieu de filtration (10) est formé en panneau plissé.

12. Système selon la revendication 11, dans lequel deux bords du panneau sont assemblés pour former un milieu de filtration cylindrique.

13. Système selon l'une quelconque des revendications 1 à 12, dans lequel la couche de filtration sur membrane (20) est une membrane de polytétrafluoroéthylène microporeux (ePTFE) ayant une microstructure interne constituée essentiellement d'une série de noeuds interconnectés par des fibrilles, où les noeuds sont généralement agencés parallèlement, très allongés et ont un facteur de forme de 25:1 ou plus.

14. Système selon la revendication 13, dans lequel les noeuds ont un facteur de forme de 150:1 ou plus.

15. Système selon l'une quelconque des revendications 13 ou 14, dans lequel le polytétrafluoroéthylène (PTFE) est un mélange d'homopolymère de PTFE et un polymère de PTFE modifié.

16. Système selon l'une quelconque des revendications 13 à 15, dans lequel la couche de filtration sur membrane a une taille de pore dynamique moyenne supérieure à 1,5 µm.

17. Système selon la revendication 16, dans lequel la taille de pore dynamique moyenne est d'environ 3 µm.

18. Système dans lequel la turbine à gaz a une capacité de débit d'air de plus de 50 000 m³ par heure.

19. Utilisation d'un filtre d'admission d'air pour éliminer des particules d'un flux de gaz entrant dans une turbine à gaz, comprenant un milieu de filtration composite (10) et un cadre (14) où le milieu de filtration composite (10) est monté de manière à créer un ajustement étanche à l'air entre le milieu de filtration (10) et le cadre (14), où le milieu de filtration (10) comprend
- une couche de filtration sur membrane (20) comprenant une membrane polymère poreuse, et
- au moins une couche de milieu de filtration en profondeur (18) comprenant des fibres et disposée sur un côté amont de la couche de filtration sur membrane (20) par rapport à la direction d'écoulement de gaz à travers le filtre,
**caractérisé en ce que** les fibres de la couche de milieu de filtration en profondeur (18) ont une charge électrostatique.

20. Utilisation du filtre d'admission d'air selon la revendication 19, dans laquelle la couche de filtration sur membrane (20) comprend du polytétrafluoroéthylène poreux (ePTFE).

21. Utilisation du filtre d'admission d'air selon l'une quelconque des revendications 19 ou 20, dans laquelle une couche de support (22) est disposée sur le côté amont ou aval de et adjacente à la couche de filtration sur membrane (20).

22. Utilisation du filtre d'admission d'air selon la revendication 21, dans laquelle la couche de support (22) est laminée sur la couche de filtration sur membrane (20).

23. Utilisation du filtre d'admission d'air selon l'une quelconque des revendications 19 à 22, dans laquelle la au moins une couche de milieu de filtration en profondeur (18) comprend une bande polymère fibreuse non-tissée.

24. Utilisation du filtre d'admission d'air selon la revendication 23, dans laquelle la bande polymère fibreuse non-tissée est une bande formée par fusion-soufflage.

25. Utilisation du filtre d'admission d'air selon l'une quelconque des revendications 19 à 24, dans laquelle la couche de filtration sur membrane a une perméabilité d'au moins 128 m³/m²h (7 Frazier), plus préférablement d'au moins environ 550 m³/m²h (30 Frazier), de manière préférée entre toutes de 1100 m³/m²h (60 Frazier) ou plus.

26. Utilisation du filtre d'admission d'air selon l'une quelconque des revendications 19 à 25, dans laquelle chacune de la au moins une couche de milieu de filtration en profondeur 18 a une perméabilité d'au moins environ 550 m³/m²h (30 Frazier), plus préférablement d'au moins environ 1830 m³/m²h (100 Frazier).

27. Utilisation du filtre d'admission d'air selon l'une quelconque des revendications 19 à 26, dans laquelle le milieu de filtration composite (10) a une efficacité de filtration de particule d'au moins 90 % pour des particules d'une taille de 0,3 micron à une vitesse frontale de 10 cm/s ou moins.

28. Utilisation du filtre d'admission d'air selon l'une quelconque des revendications 19 à 27, dans laquelle la couche de filtration sur membrane (20) et la au moins une couche de milieu de filtration en profondeur (18) sont plissées de sorte que les sommets (26) de la couche de filtration sur membrane (20) et de la au moins une couche de milieu de filtration en profondeur (18) soient alignés.

29. Utilisation du filtre d'admission d'air selon la revendication 28, dans laquelle le milieu de filtration (10) est formé en panneau plissé.

30. Utilisation du filtre d'admission d'air selon la revendication 29, dans laquelle deux bords du panneau sont assemblés pour former un milieu de filtration cylindrique.

31. Utilisation du filtre d'admission d'air selon l'une quelconque des revendications 19 à 30, dans laquelle la couche de filtration sur membrane (20) est une membrane de polytétrafluoroéthylène microporeux (ePTFE) ayant une microstructure interne constituée essentiellement d'une série de noeuds interconnectés par des fibrilles, où les noeuds sont généralement agencés parallèlement, très allongés et ont un facteur de forme de 25:1 ou plus.

32. Utilisation du filtre d'admission d'air selon la revendication 31, dans laquelle les noeuds ont un facteur de forme de 150:1 ou plus.

33. Utilisation du filtre d'admission d'air selon l'une quelconque des revendications 31 ou 32, dans laquelle le polytétrafluoroéthylène (PTFE) est un mélange d'homopolymère de PTFE et un polymère de PTFE modifié.

34. Utilisation du filtre d'admission d'air selon l'une quelconque des revendications 31 à 33, dans laquelle la couche de filtration sur membrane a une taille de pore dynamique moyenne supérieure à 1,5 µm.

35. Utilisation du filtre d'admission d'air selon la revendication 34, dans laquelle la taille de pore dynamique moyenne est d'environ 3 µm.

36. Utilisation du filtre d'admission d'air selon l'une quelconque des revendications 19 à 35 dans l'admission d'air d'une turbine à gaz ayant un débit d'air de plus de 50 000 m³ par heure.
